(19) Europäisches Patentamt
European Patent Office
Office européen des brevets

(11) EP 3 041 078 A1

(12) EUROPEAN PATENT APPLICATION
published in accordance with Art. 153(4) EPC

(43) Date of publication:
06.07.2016 Bulletin 2016/27

(21) Application number: 14840961.8

(22) Date of filing: 29.08.2014

(51) Int Cl.:
*H01M 10/0525* (2010.01) *H01M 4/485* (2010.01)
*H01M 10/0567* (2010.01) *H01M 10/0568* (2010.01)
*H01M 10/0569* (2010.01)

(86) International application number:
PCT/JP2014/072776

(87) International publication number:
WO 2015/030190 (05.03.2015 Gazette 2015/09)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 30.08.2013 JP 2013179743

(71) Applicant: UBE Industries, Ltd.
Ube-shi, Yamaguchi 755-8633 (JP)

(72) Inventors:
- ABE, Koji
Ube-shi
Yamaguchi 755-8633 (JP)
- MIYOSHI, Kazuhiro
Ube-shi
Yamaguchi 755-8633 (JP)
- KONDO, Masahide
Ube-shi
Yamaguchi 755-8633 (JP)

(74) Representative: Gille Hrabal
Brucknerstrasse 20
40593 Düsseldorf (DE)

# (54) NONAQUEOUS ELECTROLYTE SOLUTION FOR ELECTRICITY STORAGE DEVICES

(57) There is provided a nonaqueous electrolytic solution for an energy storage device provided with a positive electrode, a negative electrode and a nonaqueous electrolytic solution which is obtained by dissolving an electrolytic salt into a nonaqueous solvent, wherein the negative electrode contains, as a negative electrode active material, lithium titanate that has a ratio $D_{BET}/D_X$ (μm/μm) of 3 or less, the ratio $D_{BET}/D_x$ (μm/μm) being a ratio of a specific surface area equivalent diameter $D_{BET}$ calculated from a specific surface area measured by a BET method to a crystallite diameter $D_X$ calculated using a Scherrer equation from an X-ray diffractometry result, and the nonaqueous electrolytic solution contains 0.01 to 3% by mass of an organic or inorganic compound having an oxalate structure, and 0.01 to 5% by mass of at least one isocyanate compound.



Printed by Jouve, 75001 PARIS (FR)

## Description

### TECHNICAL FIELD

The present invention relates to a nonaqueous electrolytic solution that can improve electrochemical properties in a broad temperature range in an energy storage device having a negative electrode active material containing lithium titanate, and a secondary battery using the same.

### BACKGROUND ART

In recent years, an energy storage device, particularly a lithium secondary battery is widely used for a small-sized electronic equipment such as a cellular phone and a laptop computer, an electric vehicle or storage of the electric power. These electronic equipments, vehicle or storage of the electric power is likely to be used in a broad temperature range of high temperature in the midsummer, low temperature in the arctic weather etc., and thus it is required to improve the electrochemical properties in a broad temperature range with a good balance.

Particularly in order to prevent global warming, it is urgently needed to cut $CO_2$ discharge, and immediate diffusion of a hybrid electric vehicle (HEV), a plug-in hybrid electric vehicle (PHEV), or a battery electric vehicle (BEV) is demanded, among environment-friendly cars loaded with an energy storage device including an energy storage device such as a lithium secondary battery and a capacitor. A vehicle has long migration length, and thus is likely used in a region of broad temperature range from tropical, very hot region to arctic weather region. Accordingly, these energy storage devices for a vehicle are demanded to have no deterioration for the electrochemical properties even when used in a broad temperature range from high temperature to low temperature. Incidentally, in the present description, the term of the lithium secondary battery is used as a concept also including a so-called lithium ion secondary battery.

A lithium secondary battery mainly consists of a positive electrode and a negative electrode containing materials which can absorb and release lithium, and a nonaqueous electrolytic solution including a lithium salt and a nonaqueous solvent, and as the nonaqueous solvent, a carbonate such as ethylene carbonate (EC) and propylene carbonate (PC) is used.

Further, as the negative electrode, metal lithium, and a metal compound (metal element, oxide, alloy with lithium, etc.) and a carbon material which can absorb and release lithium are known. Particularly, lithium secondary battery produced by using a carbon material, such as coke, artificial graphite, natural graphite and the like which can absorb and release lithium are widely put into practical use.

However, regarding the carbon material, when charging and discharging are performed under severe environmental conditions, for example, extremely low temperature, dendrites are generated on the negative electrode, and this causes internal short circuit or the like. Accordingly, there is a problem in reliability of the battery.

In this regard, lithium titanate with an oxidation-reduction potential of 1.5 V based on lithium has been proposed as a negative electrode material which does not generate dendrites. However, there is a problem that lithium titanate has extremely low electron conductivity compared to a carbon material.

In order to solve the problem, various investigations for decreasing the internal resistance of lithium titanate by controlling the particle shape of lithium titanate to increase the specific surface area have been conducted. However, when the specific surface area is simply increased, the side reaction between lithium titanate and an electrolytic solution (specifically, reductive degradation of the electrolytic solution) easily occurs. As a result, decomposed products or gases generated by reductive degradation inhibit the desired electrochemical reaction of the battery. Therefore, absorbing and releasing of lithium to lithium titanate cannot be performed smoothly, and thus the electrochemical properties in a broad temperature range are likely to deteriorate.

On the other hand, in a lithium secondary battery produced by using, for example, $LiCo0_2$, $LiMn_2O_4$, $LiNiO_2$, $LiFePO_4$, or the like as a positive electrode, it is known that since decomposed products or gases generated due to that a nonaqueous solvent in a nonaqueous electrolytic solution which partially oxidized and decomposed in a local part on an interface between the positive electrode material and the nonaqueous electrolytic solution in a charging state detract from a desired electrochemical reaction of the battery, the electrochemical properties are deteriorated as well in a broad temperature range.

As described above, the decomposed products or gases generated when the nonaqueous electrolytic solution is decomposed on the negative electrode or the positive electrode may interfere with a migration of lithium ions or may swell the battery, and the battery performance is thereby deteriorated. In spite of such a circumstance, electronic equipment in which a lithium secondary battery is loaded is advanced more and more in multi-functionalization and tends to be increased in an electric power consumption. For this reason, a lithium secondary battery is advanced more and more in an elevation of a capacity, and a nonaqueous electrolytic solution is reduced in a volume thereof occupied in the battery, in which the electrode is increased in a density, and a useless space volume in the battery is reduced. Accordingly, observed is a situation in which the electrochemical properties thereof in a broad temperature range are liable to be

deteriorated by decomposition of only a small amount of the nonaqueous electrolytic solution.

Patent Document 1 has proposed a nonaqueous electrolytic solution battery obtained by using a negative electrode that contains a negative electrode active material having a lithium absorbing and releasing potential higher than 1.0 V (vs $Li/Li^+$) and a nonaqueous electrolytic solution in which an organic compound having an isocyanate group is added to a nonaqueous solvent. Further, there is description that gas generation reaction in the nonaqueous electrolytic solution battery obtained by using a material having a high Li absorbing and releasing potential as a negative electrode active material is suppressed.

PRIOR ART DOCUMENTS

PATENT DOCUMENTS

Patent Document 1: Japanese Patent Publication No. 2009-054319 A

SUMMARY OF THE INVENTION

PROBLEM TO BE SOLVED BY THE INVENTION

An object of the present invention is to provide an energy storage device having a negative electrode active material containing lithium titanate, the energy storage device capable of improving electrochemical properties in a broad temperature range.

MEANS FOR SOLVING THE PROBLEMS

The present inventors specifically investigated the performance of the nonaqueous electrolytic solution of the related art.

As a result, it was found that the nonaqueous electrolyte secondary battery of Patent Document 1 described above did almost not exhibit the effect with respect to the problem of improving the electrochemical properties in a broad temperature range such as discharge properties at low temperature after storage at high temperature.

In this regard, the present inventors have repeated the researches earnestly to solve the problem, and found that the electrochemical properties of an energy storage device in a broad temperature range can be improved by means of a nonaqueous electrolytic solution in which an organic or inorganic compound having a specific oxalate structure is contained in a specific addition amount and one or more kinds of a compound having a specific isocyanate group are contained in a specific addition amount, in a secondary battery that is provided with, as a negative electrode active material, lithium titanate that has a ratio of a specific surface area equivalent diameter $D_{BET}$ as calculated from a specific surface area measured by a BET method to a crystallite diameter $D_x$ calculated using a Scherrer equation from an X-ray diffractometry result, namely $D_{BET}/D_X$ ($\mu$m/$\mu$m) of 3 or less, whereby to complete the present invention. Such an effect is not suggested in Patent Document 1 described above at all.

That is, the present invention provides (1) and (2) described below.

(1) A nonaqueous electrolytic solution for an energy storage device provided with a positive electrode, a negative electrode and a nonaqueous electrolytic solution which is obtained by dissolving an electrolytic salt into a nonaqueous solvent, wherein

the negative electrode contains, as a negative electrode active material, lithium titanate that has a ratio $D_{BET}/D_x$ ($\mu$m/$\mu$m) of 3 or less, the ratio $D_{BET}/D_x$ ($\mu$m/$\mu$m) being a ratio of a specific surface area equivalent diameter $D_{BET}$ calculated from a specific surface area measured by a BET method to a crystallite diameter $D_x$ calculated using a Scherrer equation from an X-ray diffractometry result, and

the nonaqueous electrolytic solution contains 0.01 to 3% by mass of an organic or inorganic compound having an oxalate structure, and 0.01 to 5% by mass of at least one isocyanate compound represented by the following General Formula (I).

**O=C=N-X** **(I)**

(In the formula, -X represents $-R^1-N=C=O$ or $-R^I-O-C(=O)-R^2$, $R^1$ represents a linear or branched alkylene group having 1 to 6 carbon atoms in which at least one hydrogen atom is optionally substituted with a halogen atom, and $R^2$ represents an alkyl group having 1 to 6 carbon atoms, alkenyl group having 2 to 6 carbon atoms, or aryl group

having 6 to 12 carbon atoms in which at least one hydrogen atom is optionally substituted with a halogen atom.)

(2) An energy storage device including:

a positive electrode;
a negative electrode; and
a nonaqueous electrolytic solution which is obtained by dissolving an electrolytic salt into a nonaqueous solvent, wherein
the negative electrode which contains, as a negative electrode active material, lithium titanate that has a ratio $D_{BET}/D_X$ (μm/μm) of 3 or less, the ratio $D_{BET}/D_X$ (μm/μm) being a ratio of a specific surface area equivalent diameter $D_{BET}$ calculated from a specific surface area measured by a BET method to a crystallite diameter $D_x$ calculated using a Scherrer equation from an X-ray diffractometry result, and
the nonaqueous electrolytic solution contains 0.01 to 3% by mass of an organic or inorganic compound having an oxalate structure, and 0.01 to 5% by mass of at least one isocyanate compound represented by the above General Formula (I).

EFFECT OF THE INVENTION

According to the present invention, it is possible to provide a nonaqueous electrolytic solution which can improve electrochemical properties of the energy storage device having a negative electrode active material containing lithium titanate in a broad temperature range, particularly discharge properties at low temperature after storage at high temperature, and an energy storage device using the same.

DESCRIPTION OF EMBODIMENTS

[Lithium Titanate]

An energy storage device according to the present invention includes, as a negative electrode active material, lithium titanate that has a ratio of a specific surface area equivalent diameter $D_{BET}$ calculated from a specific surface area measured by a BET method to a crystallite diameter $D_x$ calculated using a Scherrer equation from an X-ray diffractometry result, namely $D_{BET}/D_x$ (μm/μm) of 3 or less.

The lithium titanate used in the present invention is monodisperse particles in which the formation of secondary particles and aggregation of primary particles are suppressed. For this reason, in the lithium titanate, the diffusion distance of lithium ions in respective particles can be shortened, and the internal resistance of the battery can be decreased. Further, since the lithium titanate is monodisperse particles, the nonaqueous electrolytic solution can be brought into contact with the entire surface of respective particles. For this reason, the protection effect by a specific compound contained in the nonaqueous electrolytic solution of the present invention can be sufficiently provided to the lithium titanate.

The lithium titanate used in the present invention is preferably represented by $Li_4Ti_5O_{12}$. In addition, anatase-type titanium dioxide, rutile-type titanium dioxide, and $Li_2TiO_3$ may be present in the lithium titanate. However, when these phases are present, the content of $Li_4Ti_5O_{12}$ is relatively decreased, and thus the electrochemical properties such as a discharge capacity are decreased. Therefore, it is preferable that an amount of these phases be small.

From this point, when the peak intensity corresponding to the main peak of $Li_4Ti_5O_{12}$ is 100 among peaks measured by an X-ray diffractometry, the main peak intensities of other phases (anatase-type titanium dioxide, rutile-type titanium dioxide, and $Li_2TiO_3$) is preferably 3 or less and more preferably 1 or less.

Herein, the peak intensity indicates the height from the base line to the peak top.

The volume-based median diameter (D50) of the lithium titanate used in the present invention is preferably in a range of 0.01 to 20 μm. When the volume-based median diameter is 0.01 μm or more, the aggregation of particles at the time of manufacturing an electrode is suppressed. When the volume-based median diameter is 20 μm or less, the internal resistance can be decreased by increasing the surface area. The volume-based median diameter (D50) is preferably 0.05 μm or more, and more preferably 0.1 μm or more. In addition, the upper limit thereof is preferably 10 μm or less, more preferably 5 μm or less, and particularly preferably 1 μm or less.

The BET specific surface area of the lithium titanate used in the present invention by a nitrogen adsorption method is preferably 3 $m^2/g$ or more, more preferably 4 $m^2/g$ or more, and particularly preferably 5 $m^2/g$ or more, from the viewpoint of decreasing the internal resistance. In addition, from the viewpoint of suppressing the side reaction with the electrolytic solution, the BET specific surface area is preferably 100 $m^2/g$ or less, more preferably 50 $m^2/g$ or less, and particularly preferably 20 $m^2/g$ or less.

It is preferable that, in the lithium titanate used in the present invention, the ratio $D_{BET}/D_x$ (μm/μm) of the specific surface area equivalent diameter $D_{BET}$ calculated from the specific surface area measured by a BET method to a crystallite diameter Dx calculated using a Scherrer equation from an X-ray diffractometry result be 3 or less. As the value

of the ratio $D_{BET}/D_x$ increases, the ratio of the grain boundary portion increases, and this means the state in which particles are aggregated or secondary particles are formed. When the ratio $D_{BET}/D_x$ is more than 3, the interface resistance of particles increases. Therefore, $D_{BET}/D_x$ is preferably 3 or less, more preferably 2 or less, and particularly preferably 1.5 or less.

Herein, the specific surface area equivalent diameter BET is calculated by $D_{BET} = 6/(\rho S)$ from the specific surface area S measured by a BET method and the theoretical density $\rho$ calculated from the lattice constant of cubical crystal assuming that all of powder particles are spherical particles having a constant diameter $D_{BET}$. In addition, the crystallite diameter $D_x$ is obtained by using the following Scherrer equation for the main peak of the X-ray diffraction pattern.

$$Dx = (K\lambda) / (\beta \cos\theta) \qquad (II)$$

(provided that, K = 0.94, $\beta$: half width of the peak at which the inherent spread in the diffraction system is corrected, $2\theta$: diffraction angle)

$D_x$ of the lithium titanate used in the present invention is preferably more than 80 nm since the low temperature properties of the energy storage device according to the present invention after charge and storage at high temperature becomes more favorable. $D_x$ is further preferably 90 nm or more, particularly preferably 100 nm or more, and most preferably 200 nm or more. In addition, $D_x$ of lithium titanate of the present invention is preferably 500 nm or less. When $D_x$ is more than 500 nm, $D_{BET}$ may increase in some cases, and thus the low temperature properties of the energy storage device according to the present invention may decrease in some cases.

The pH of the lithium titanate used in the present invention is preferably in a range of 9 to 13. The pH is preferably 9 or more since dispersibility is improved, and the pH is preferably 13 or less since gelation at the time of producing an electrode slurry is suppressed. The pH is preferably 9.5 or more, more preferably 10 or more, and particularly 10.5 or more. In addition, the upper limit thereof is preferably 12.5 or less, and more preferably 12 or less.

Herein, the pH of lithium titanate means the pH of a supernatant solution when 10 g of lithium titanate is dispersed in 90 g of water.

When the lithium titanate having the ratio $D_{BET}/D_x$ of the specific surface area equivalent diameter $D_{BET}$ calculated from the specific surface area measured by the BET method to the crystallite diameter $D_x$ calculated from the X-ray diffractometry result by using the Scherrer equation of 3 or less and having a pH in the above range is used, the electrochemical properties in a broad temperature range are improved, which is preferable.

[Nonaqueous Electrolytic solution]

The energy storage device according to the present invention includes a nonaqueous electrolytic solution which is obtained by dissolving an electrolytic salt into a nonaqueous solvent contains 0.01 to 3% by mass of an organic or inorganic compound having an oxalate structure and contains 0.01 to 5% by mass of at least one isocyanate compound represented by the above General Formula (I).

The reason why the nonaqueous electrolytic solution of the present invention can considerably improve the electrochemical properties of the energy storage device in a broad temperature range is not necessarily known, but is considered as follows.

The organic or inorganic compound having an oxalate structure used as a combination in the present invention is reduced and decomposed at a potential higher than the oxidation-reduction potential of lithium titanate that is a negative electrode active material, and a coating film is formed on the surface of the lithium titanate particles by a product obtained by reductive degradation. However, since this coating film is dissolved and reformed when the coating film is stored in the charge state under high temperature, the coating film is grown and thus the interface resistance is greatly increased. On the other hand, in the nonaqueous electrolytic solution of the present invention, by using at least one isocyanate compound represented by General Formula (I) together with the compound having the oxalate structure, the compound having the oxalate structure and the specific isocyanate compound represented by General Formula (I) are combined to rapidly form a composite coating film at an active point of lithium titanate. Then, it is found that the composite coating film prevents the growth of the coating film during storage at high temperature, and an increase in the interface resistance is dramatically suppressed.

As the organic or inorganic compound having an oxalate structure contained in the nonaqueous electrolytic solution of the present invention, compounds having structures of the following A1 to A12 may be suitably mentioned. Incidentally, in the present invention, the inorganic compound having an oxalate structure means a composite compound composed of an organic part having an oxalate structure and an inorganic part mainly having an element other than carbon (for example, boron, phosphorus, etc.). In addition, the organic compound having an oxalate structure means a compound composed of only an organic part having an oxalate structure and not including an inorganic part mainly

having an element other than carbon.

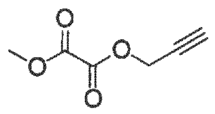

A1

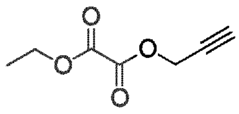

A2

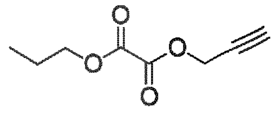

A3

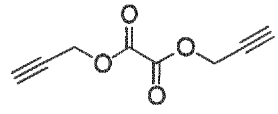

A4

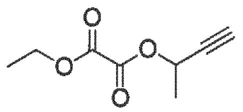

A5

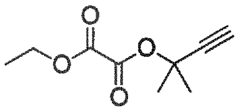

A6

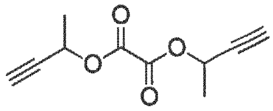

A7

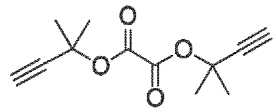

A8

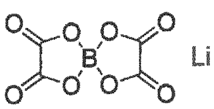

A9

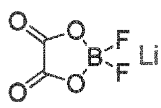

A10

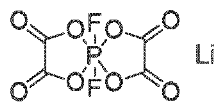

A11

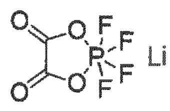

A12

Of these, compounds having structures of A1, A4, or A7 to A12 described above are preferable, a compound having a structure of A1, A4, A9, or A11 is more preferable, and bis (2-propynyl) oxalate (Compound A4) or lithium difluorobis[oxalate-O,O'] phosphate (Compound All) is particularly preferable.

The content of the above-described organic or inorganic compound having oxalate structure is preferably in a range of 0.01 to 3% by mass in the nonaqueous electrolytic solution. When the content thereof is 3% by mass or less, the concern that the properties at low temperature are decreased due to too much formation of the coating film on the electrode is small. When the content thereof is 0.01% by mass or more, formation of the coating film on the electrode is sufficient, and electrochemical properties are improved in a broad temperature range. The content thereof is preferably 0.05% by mass or more in the nonaqueous electrolytic solution, more preferably 0.1% by mass or more, and further preferably 0.3% by mass or more. The upper limit thereof is preferably 2.5% by mass or less, more preferably 2% by mass or less, and further preferably 1.5% by mass or less.

The isocyanate compound contained in the nonaqueous electrolytic solution of the present invention is represented by the following General Formula (I).

**O=C=N-X (I)**

(In the formula, -X represents $-R^1-N=C=O$ or $-R^1-O-C(=O)-R^2$, $R^1$ represents a linear or branched alkylene group having 1 to 6 carbon atoms in which at least one hydrogen atom is optionally substituted with a halogen atom, and $R^2$ represents an alkyl group having 1 to 6 carbon atoms, alkenyl group having 2 to 6 carbon atoms, or aryl group having 6 to 12 carbon atoms in which at least one hydrogen atom is optionally substituted with a halogen atom.)

Incidentally, in the present application, an alkylene group is used as a concept also including a methylene group.

$R^1$ in the above General Formula (I) represents a linear or branched alkylene group having 1 to 6 carbon atoms in which at least one hydrogen atom is optionally substituted with a halogen atom, and is more preferably a linear alkylene group.

As specific examples of the $R^1$, alkylene groups such as a methylene group, an ethane-1,2-diyl group, an ethane-1,1-diyl group, a propane-1,3-diyl group, a propane-1,2-diyl group, a propane-1,1-diyl group, a butane-1,4-diyl group, a butane-1,3-diyl group, a 2-methylpropane-1,2-diyl group, a pentane-1,5-diyl group, and a hexane-1,6-diyl group, or halogenated alkylene groups such as a monofluoromethylene group, a difluoromethylene group, a 1,2-difluoroethane-1,2-diyl group, a 1,1-difluoroethane-1,2-diyl group, a 1,3-difluoropropane-1,3-diyl group, and a 2,2-difluoropropane-1,3-diyl group may be suitably mentioned.

Among them, a methylene group, an ethane-1,2-diyl group, an ethane-1,1-diyl group, a propane-1,3-diyl group, a propane-1,2-diyl group, a propane-1,1-diyl group, a butane-1,4-diyl group, a butane-1,3-diyl group, a 2-methylpropane-1,2-diyl group, a pentane-1,5-diyl group, a hexane-1,6-diyl group, a monofluoromethylene group, or a difluoromethylene group is preferable, and an ethane-1,2-diyl group, a propane-1,3-diyl group, a propane-1,2-diyl group, a butane-1,4-diyl group, a pentane-1,5-diyl group, or a hexane-1,6-diyl group is further preferable.

$R^2$ in the above General Formula (I) represents an alkyl group having 1 to 6 carbon atoms, an alkenyl group having 2 to 6 carbon atoms, or an aryl group having 6 to 12 carbon atoms which is optionally substituted with halogen,

is more preferably an alkyl group having 1 to 4 carbon atoms, an alkenyl group having 2 to 4 carbon atoms, or an aryl group having 6 to 10 carbon atoms, and is further preferably an alkyl group having 1 to 4 carbon atoms or an alkenyl group having 2 to 4 carbon atoms.

As specific examples of the $R^2$, alkyl groups such as a methyl group, an ethyl group, a n-propyl group, a n-butyl group, a n-pentyl group, a n-hexyl group, an iso-propyl group, a sec-butyl group, and a tert-butyl group, alkenyl groups such as a vinyl group, an allyl group, a 1-propen-1-yl group, a 2-buten-1-yl group, a 3-buten-1-yl group, a 4-penten-1-yl group, a 5-hexen-1-yl group, a 1-propen-2-yl group, and a 3-methyl-2-buten-1-yl group, or aryl groups such as a phenyl group, a 2-methylphenyl group, a 3-methylphenyl group, a 4-methylphenyl group, a 4-tert-butylphenyl group, a 2,4,6-trimethylphenyl group, a 2-fluorophenyl group, a 3-fluorophenyl group, a 4-fluorophenyl group, a 2,4-difluorophenyl group, a 2,6-difluorophenyl group, a 3,4-difluorophenyl group, a 2,4,6-trifluorophenyl group, a pentafluorophenyl group, and a 4-trifluoromethylphenyl group may be suitably mentioned. Among them, a methyl group, an ethyl group, a vinyl group, a 1-propen-2-yl group, or a phenyl group is preferable, and a methyl group, a vinyl group, or a 1-propen-2-yl group is further preferable.

As a specific isocyanate compound represented by the above General Formula (I), compounds having the following structures of B1 to B42, etc. may be suitably mentioned.

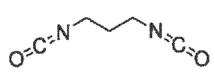
B1

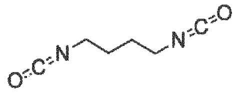
B2

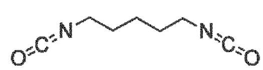
B3

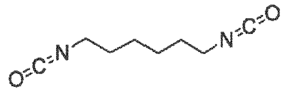
B4

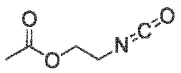
B5

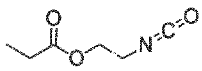
B6

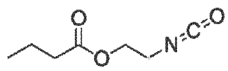
B7

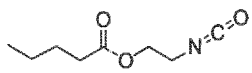
B8

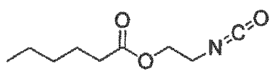
B9

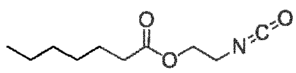
B10

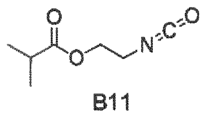
B11

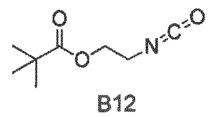
B12

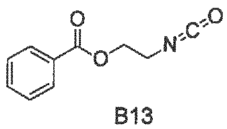
B13

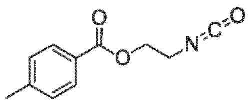
B14

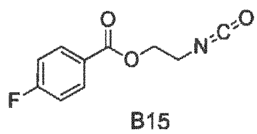
B15

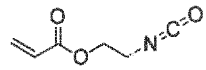
B16

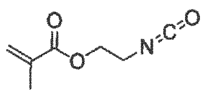
B17

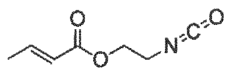
B18

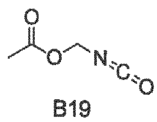
B19

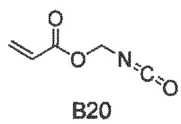
B20

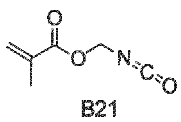
B21

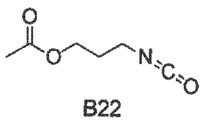
B22

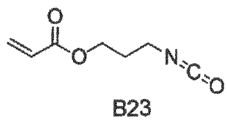
B23

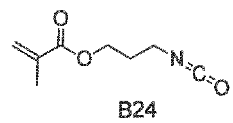
B24

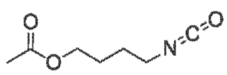
B25

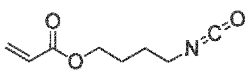
B26

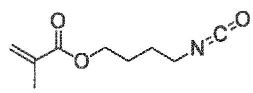
B27

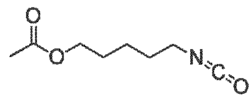
B28

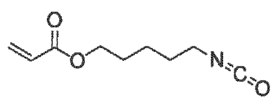
B29

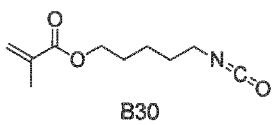
B30

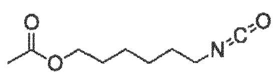
B31

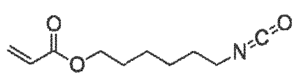
B32

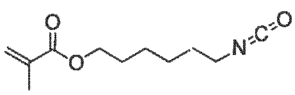
B33

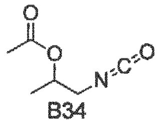
B34

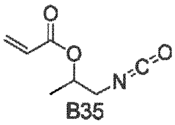
B35

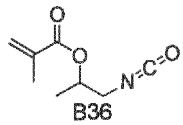
B36

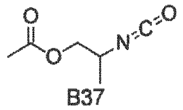
B37

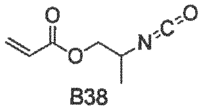
B38

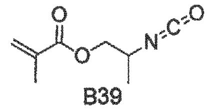
B39

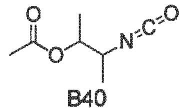
B40

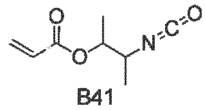
B41

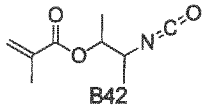
B42

Among them, compounds having structures of the above B1 to B5, B13, B14, B16 to B18, B22 to B24, or B39 to B42 are preferable, a compound having structure of B2, B4, B5, B16, or B17 is more preferable, and 1,6-diisocyanate hexane (Compound B4), 2-isocyanatoethyl acrylate (Compound B16), or 2-isocyanatoethyl methacrylate (Compound B17) is particularly preferable.

In the nonaqueous electrolytic solution of the present invention, the content of the isocyanate compound represented by the above General Formula (I) contained in the nonaqueous electrolytic solution is preferably in a range of 0.01 to 5% by mass in the nonaqueous electrolytic solution. When the content thereof is 5% by mass or less, the concern that the properties at low temperature are decreased due to too much formation of the coating film on the electrode is small. When the content thereof is 0.01% by mass or more, formation of the coating film on the electrode is sufficient and the effect of improving the storage properties at high temperature increases. The content thereof is preferably 0.05% by mass or more and more preferably 0.1% by mass or more in the nonaqueous electrolytic solution. In addition, the upper limit thereof is preferably 4% by mass or less, more preferably 3% by mass or less, and particularly preferably 2% by mass or less.

Further, when the organic or inorganic compound having an oxalate structure is used together with the specific isocyanate compound represented by the above General Formula (I), the ratio (mass ratio) of the content of the organic or inorganic compound having an oxalate structure contained in the nonaqueous electrolytic solution to the content of the isocyanate compound represented by the above General Formula (I), namely the organic or inorganic compound having an oxalate structure : the isocyanate compound, is preferably 1 : 99 to 49 : 51 since the electrochemical properties in a broad temperature range is further improved, and the ratio thereof is more preferably 5 : 95 to 45 : 55, further preferably 15 : 85 to 45 : 55, and particularly preferably 15 : 85 to 45 : 60.

Combination of a nonaqueous solvent, an electrolytic salt, and further other additives to be described below in the nonaqueous electrolytic solution of the present invention allows the nonaqueous electrolytic solution to exert synergistically the specific effects of improving the electrochemical properties in a broad temperature range.

[Nonaqueous Solvent]

As the nonaqueous solvent used in the nonaqueous electrolytic solution of the present invention, one kind or two or more kinds selected from cyclic carbonate, chain ester, lactone, ether, and amide may be mentioned. From the viewpoint of synergistically improving the electrochemical properties in a broad temperature range, chain ester is preferably contained, chain carbonate is more preferably contained, and both of cyclic carbonate and chain carbonate are furthermore preferably contained.

Incidentally, the term "chain ester" is used as a concept including chain carbonate and chain carboxylic acid ester.

As the cyclic carbonate, one or two or more kinds selected from ethylene carbonate (EC), propylene carbonate (PC), 1,2-butylene carbonate, 2,3-butylene carbonate, 4-fluoro-1,3-dioxolane-2-one (FEC), trans- or cis-4,5-difluoro-1,3-dioxolane-2-one (hereinafter, both of them are collectively referred to as "DFEC"), vinylene carbonate (VC), vinyl ethylene carbonate (VEC), and 4-ethynyl-1,3-dioxolane-2-one (EEC) may be mentioned. One or two or more kinds selected from ethylene carbonate, propylene carbonate, 4-fluoro-1,3-dioxolane-2-one, vinylene carbonate, and 4-ethynyl-1,3-dioxolane-2-one (EEC) are more preferable.

Among them, at least one kind of ethylene carbonate and propylene carbonate is preferably used since the electrochemical properties in a broad temperature range is further improved, and it is more preferable to contain propylene carbonate.

The nonaqueous solvent preferably contains ethylene carbonate and/or propylene carbonate since the resistance of the coating film formed on the electrode is reduced. The content of ethylene carbonate and/or propylene carbonate is preferably 3% by volume or more, more preferably 5% by volume or more, and further preferably 7% by volume or more with respect to the total volume of the nonaqueous solvent. In addition, the upper limit thereof is preferably 45% by volume or less, more preferably 35% by volume or less, and furthermore preferably 25% by volume or less.

When ethylene carbonate is used together with propylene carbonate, the ratio (volume ratio) of the content of ethylene carbonate to the content of propylene carbonate, namely ethylene carbonate : propylene carbonate, is preferably 1 : 99 to 49 : 51 since the electrochemical properties in a broad temperature range is further improved, and the ratio thereof is more preferably 5 : 95 to 45 : 65 and particularly preferably 10 : 90 to 40 : 60.

As the chain ester, one or two or more kinds of asymmetrically chain carbonates selected from methyl ethyl carbonate (MEC), methyl propyl carbonate, methyl isopropyl carbonate, methyl butyl carbonate, and ethyl propyl carbonate, one or two or more kinds of symmetrically chain carbonates selected from dimethyl carbonate (DMC), diethyl carbonate (DEC), dipropyl carbonate, and dibutyl carbonate, and one or two or more kinds of chain carboxylic acid esters selected from methyl propionate, ethyl propionate, methyl acetate, and ethyl acetate may be suitably mentioned.

Among the chain esters, chain esters having an ethyl group selected from diethyl carbonate, methyl ethyl carbonate, ethyl propyl carbonate, ethyl propionate, and ethyl acetate are preferable, and chain carbonate having an ethyl group is particularly preferable.

Further, when the chain carbonate is used, two or more kinds thereof are preferably used. Moreover, it is more preferable to contain both of symmetrically chain carbonate and asymmetrically chain carbonate, and it is further preferable that the content of the symmetrically chain carbonate be more than that of the asymmetrically chain carbonate.

The content of the chain ester is not particularly limited, but the content thereof is preferably in a range of 60 to 90% by volume with respect to the total volume of the nonaqueous solvent. When the content thereof is 60% by volume or more, the viscosity of the nonaqueous electrolytic solution does not become too high. When the content thereof is 90% by volume or less, the concern that the electrochemical properties in a broad temperature range are decreased due to the decrease in the electrical conductivity of the nonaqueous electrolytic solution is small. Thus, the above-mentioned range is preferable.

The ratio of the volume occupied by the symmetrically chain carbonates in the chain carbonate is preferably 51% by volume or more and more preferably 55% by volume or more. The upper limit thereof is more preferably 95% by volume or less and further preferably 85% by volume or less. It is particularly preferable to include diethyl carbonate in the symmetrically chain carbonate. In addition, the asymmetrically chain carbonate more preferably contains an ethyl group, and, as the asymmetrically chain carbonate, methyl ethyl carbonate is particularly preferable.

The above-mentioned case is preferable since the electrochemical properties in a broad temperature range are further improved.

The ratio of the cyclic carbonate to the chain ester, namely cyclic carbonate : chain ester (volume ratio), is preferably 10 : 90 to 45 : 55, more preferably 15 : 85 to 40 : 60, and particularly preferably 20 : 80 to 35 : 65, from the viewpoint of improving the electrochemical properties in a broad temperature range.

As the other nonaqueous solvents, one or two or more kinds selected from a cyclic ether such as tetrahydrofuran, 2-methyl tetrahydrofuran, and 1,4-dioxane, a chain ether such as 1,2-dimethoxy ethane, 1,2-diethoxy ethane, and 1,2-dibutoxyethane, an amide such as dimethyl formamide, a sulfone such as sulfolane, and a lactone such as $\gamma$-butyrolactone, $\gamma$-valerolactone, and $\alpha$-angelica lactone may be suitably mentioned.

The above-mentioned nonaqueous solvent is usually used in a mixture in order to accomplish appropriate physical properties. As the combination thereof, for example, a combination of the cyclic carbonate and the chain carbonate, a combination of the cyclic carbonate and the chain carboxylic acid ester, a combination of the cyclic carbonate and the lactone, a combination of the cyclic carbonate, the chain carbonate, and the lactone, or a combination of the cyclic carbonate, the chain carbonate, and the chain carboxylic acid ester, etc. may be suitably mentioned.

[Electrolytic Salt]

As the lithium salt, inorganic lithium salts such as $LiPF_6$, $LiPO_2F_2$, $Li_2PO_3F$, $LiBF_4$, and $LiClO_4$, lithium salts containing a chain fluoroalkyl group such as $LiN(SO_2CF_3)_2$, $LiN(SO_2C_2F_5)_2$, $LiCF_3SO_3$, and $LiC(SO_2CF_3)_3$, lithium salts having, as an anion, one containing a cyclic fluoroalkylene chain such as $(CF_2)_2(SO_2)_2NLi$ and $(CF_2)_3(SO_2)_2NLi$, and lithium salts having a sulfonate structure such as lithium fluorosulfate ($FSO_3Li$) and lithium trifluoro((methanesulfonyl)oxy)borate (LiTFMSB) are suitably mentioned, and these can be used alone or in combination of two or more kinds thereof.

Among these, one or two or more kinds selected from $LiPF_6$, $LiPO_2F_2$, $Li_2PO_3F$, $LiBF_4$, $LiN(SO_2CF_3)_2$, $LiN(SO_2C_2F_5)_2$, and LiTFMSB are preferably used, one or two or more kinds selected from $LiPF_6$, $LiBF_4$, $LiPO_2F_2$, $LiN(SO_2F)_2$, $FSO_3Li$, and LiTFMSB are more preferably used, and $LiPF_6$ is most preferably used. The concentration of the lithium salt is, usually, with respect to the nonaqueous solvent, preferably 0.3 M or more, more preferably 0.7 M or more, and furthermore preferably 1.1 M or more. In addition, the upper limit thereof is preferably 2.5 M or less, more

preferably 2.0 M or less, and furthermore preferably 1.6 M or less.

Further, as a suitable combination of these lithium salts, it is preferable to include $LiPF_6$ and further include one or two or more kinds selected from $LiPO_2F_2$, $Li_2PO_3F$, $LiBF_4$, $LiN(SO_2CF_3)_2$, $LiN(SO_2C_2F_5)_2$, $FSO_3Li$, and LiTFMSB. When the ratio of a lithium salt other than $LiPF_6$ in the nonaqueous solvent is 0.001 M or more, the effect of improving the electrochemical properties at high temperature is easily exerted. When the ratio thereof is 0. 005 M or less, a concern that the effect of improving the electrochemical properties at high temperature is decreased is small, which is favorable. The ratio thereof is preferably 0.01 M or more, particularly preferably 0.03 M or more, and most preferably 0.04 M or more. The upper limit thereof is preferably 0.4 M or less and particularly preferably 0.2 M or less.

[Manufacturing of Nonaqueous Electrolytic solution]

The nonaqueous electrolytic solution of the present invention can be obtained by, for example, mixing the above-described , and adding to this the electrolytic salt, an organic or inorganic compound having an oxalate structure and at least one of isocyanate compounds represented by the above General Formula (I).

At this time, as the nonaqueous solvent and the compound added to the nonaqueous electrolytic solution to be used, the compound having small impurities as possible by being purified in advance is preferably used within a range where the productivity does not prominently deteriorate.

[Energy Storage Device]

The nonaqueous electrolytic solution of the present invention can be used in the energy storage device which stores and releases energy by using intercalation or deintercalation of lithium ions to the negative electrode containing the lithium titanate. As such an energy storage device, for example, a hybrid capacitor, a lithium battery, etc. may be mentioned.

[Hybrid Capacitor]

A hybrid capacitor in the present invention is a device produced by using, as a positive electrode, an active material in which capacity is formed by physical adsorption similar to that of an electrode material of an electrical double layer capacitor such as activated carbon, an active material in which capacity is formed by physical adsorption and intercalation or deintercalation such as graphite, or an active material in which capacity is formed by redox such as a conductive polymer, using, as a negative electrode, a negative electrode containing the lithium titanate described above, and using, as an electrolytic solution, the above-mentioned nonaqueous electrolytic solution of the present invention.

[Lithium Battery]

The lithium battery is a general term for a lithium primary battery and a lithium secondary battery. Further, in the present description, the term of the lithium secondary battery is used as a concept also including the so-called lithium ion secondary battery.

The lithium battery of the present invention includes a positive electrode, a negative electrode containing lithium titanate described above, and the above-described nonaqueous electrolytic solution of the present invention. The constituent members such as the positive electrode and a separator can be used without particular limitation.

For example, as the positive electrode active material for a lithium secondary battery, a complex metal oxide with lithium, which contains one or more kinds selected from cobalt, manganese and nickel, is used. These positive electrode active materials may be used alone in one kind or in combination of two or more kinds.

As the lithium complex metal oxide, for example, one or two or more kinds selected from $LiCo0_2$, $LiMn_2O_4$, $LiNiO_2$, $LiCo_{1-x}NiO_2$ ($0.01 < x < 1$), $LiCo_{1/3}Ni_{1/3}Mn_{1/3}O_2$, $LiNi_{1/2}Mn_{3/2}O_4$, and $LiCo_{0.98}Mg_{0.02}O_2$, etc. may be mentioned. Further, it may be used in combination such as $LiCoO_2$ and $LiMn_2O_4$, $LiCoO_2$ and $LiNiO_2$, $LiMn_2O_4$ and $LiNiO_2$.

In addition, a portion of the lithium complex metal oxide may be substituted with another element in order to improve the safety at the time of the overcharge, or the cycle property, and allow the usage at 4.3 V or more of the charge potential based on Li. For example, a portion of cobalt, manganese or nickel may be substituted with at least one or more kinds of elements such as Sn, Mg, Fe, Ti, Al, Zr, Cr, V, Ga, Zn, Cu, Bi, Mo and La, or a portion of O may be substituted with S or F, or the lithium complex metal oxide may be coated with a compound that contains these other elements.

Among these, a lithium complex metal oxide that allows the usage at 4.3 V or more of the charge potential of the positive electrode based on Li in the full-charge state, such as $LiCo0_2$, $LiMn_2O_4$ and $LiNiO_2$ is preferable, a lithium complex metal oxide that allows the usage at 4.4 V or more based on Li such as a solid solution with $LiCo_{1-x}M_xO_2$ (wherein, M is at least one or more kinds of elements selected from Sn, Mg, Fe, Ti, Al, Zr, Cr, V, Ga, Zn and Cu, 0.001

≤ x≤0.05), $LiCo_{1/3}Ni_{1/3}Mn_{1/3}O_2$, $LiNi_{1/2}Mn_{3/2}O_4$, and $Li_2MnO_3$ and $LiMO_2$ (M is a transitional metal such as Co, Ni, Mn and Fe) is more preferable. When a lithium complex metal oxide operating at high charge voltage is used, particularly the electrochemical properties used in a broad temperature range easily decline due to the reaction with an electrolytic solution at the time of the charge. However, the lithium secondary battery related to the present invention can suppress the decline of these electrochemical properties.

Particularly, when a positive electrode containing Mn is used, the resistance of a battery tends to easily increase due to elution of Mn ion from the positive electrode, and thus the electrochemical properties used in a broad temperature range tend to easily decline. However, the lithium secondary battery related to the present invention can suppress the decline of these electrochemical properties, and thus is preferable.

Furthermore, as the positive electrode active material, lithium-containing olivine-type phosphoric acid salt may be also used. Particularly, lithium-containing olivine-type phosphoric acid salt containing at least one or two or more kinds selected from iron, cobalt, nickel and manganese is preferable. As specific examples thereof, one or two or more kinds selected from $LiFePO_4$, $LiCoPO_4$, $LiNiPO_4$, and $LiMnPO_4$ may be mentioned.

A portion of these lithium-containing olivine-type phosphoric acid salts may be substituted with another element. A portion of iron, cobalt, nickel or manganese may be substituted with one or two or more kinds of an element selected from Co, Mn, Ni, Mg, Al, B, Ti, V, Nb, Cu, Zn, Mo, Ca, Sr, W and Zr, etc. or the lithium-containing olivine-type phosphoric acid salt may be coated with a compound containing these other elements or a carbon material. Among these, $LiFePO_4$ or $LiMnPO_4$ is preferable.

Further, the lithium-containing olivine-type phosphoric acid salt may be used in a mixture with, for example, the above positive electrode active material.

The pH of the supernatant solution when 10 g of the above-mentioned positive electrode active material is dispersed in 100 ml of distilled water is preferably 10.0 to 12.5 since the effect of improving the electrochemical properties in a further broader temperature range can be easily obtained, and further preferably 10.5 to 12.0.

Further, the positive electrode preferably contains Ni as an element since impurities such as LiOH in the positive electrode active material tends to increase, and thus the effect of improving the electrochemical properties in a further broader temperature range can be easily obtained. The atomic concentration of Ni in the positive electrode active material is further preferably 5 to 25 atomic%, and particularly preferably 8 to 21 atomic%.

The conductive material of the positive electrode is not particularly limited as long as an electron conduction material that does not cause chemical change. For example, graphites such as natural graphite (flattened graphite etc.) and artificial graphite, one or two or more kinds of carbon black selected from acethylene black, Ketj en black, channel black, furnace black, lamp black and thermal black, etc. may be mentioned. In addition, the graphite and the carbon black may be suitably mixed and used. The addition amount of the conductive material to the positive electrode mixture is preferably 1 to 10 mass%, and particularly preferably 2 to 5 mass%.

The positive electrode can be manufactured by mixing the above-mentioned positive electrode active material with the conductive material such as acethylene black and carbon black, and a binder such as polytetrafluoroethylene (PTFE), polyvinylidene fluoride (PVDF), a copolymer of styrene and butadiene (SBR), a copolymer of acrylonitrile and butadiene (NBR), carboxymethyl cellulose (CMC), and ethylene-propylene-diene terpolymer, and adding a high boiling-point solvent such as 1-methyl-2-pyrrolidone to this, and kneading them to prepare the positive electrode mixture, and then applying this positive electrode mixture to a current collector such as aluminum foil and lath plate made of stainless-steel, drying, pressure molding, and then subjecting the resultant to heat treatment at a temperature of 50°C to 250°C or so for 2 hours or so under vacuum.

The density of parts excluding the current collector of the positive electrode is ordinarily 1.5 $g/cm^3$ or more, preferably 2 $g/cm^3$ or more, more preferably 3 $g/cm^3$ or more, and further preferably 3.6 $g/cm^3$ or more in order to further enhance the capacity of the battery. Meanwhile, the upper limit is preferably 4 $g/cm^3$ or less.

The negative electrode active material for a lithium secondary battery of the present invention contains the above-mentioned lithium titanate. As the active material, one or two or more kinds of the active material other than lithium titanate maybe contained. As the other active material, a carbon material which can absorb and release lithium [graphitizable carbon, non-graphitizable carbon having 0.37 nm or more of the spacing of the (002) plane, graphite having 0.34 nm or less of the spacing of the (002) plane, etc.], tin (simple substance), a tin compound, silicon (simple substance), and a silicon compound can be used alone in one kind or in combination of two or more kinds.

The conductive material of the negative electrode is not particularly limited as long as it is an electron conduction material that does not cause chemical change. For example, graphites such as natural graphite (flaky graphite etc.) and artificial graphite, carbon blacks such as acethylene black, Ketjen black, channel black, furnace black, lamp black, and thermal black, conductive fibers such as carbon fiber and metallic fiber, metallic powder, and conductive metal oxides may be mentioned. These conductive materials may be used alone or in combination of two or more kinds thereof. As a suitable combination of these conductive materials, one containing acethylene black and one or more kinds selected from graphite such as natural graphite (flaky graphite etc.) and artificial graphite, and carbon fiber is preferable. In particular, a combination of acethylene black and carbon fiber is preferable, and, as the carbon fiber, fine carbon fiber

having a single-layered or multi-layered graphite layer is more preferable. The addition amount of the conductive material to the negative electrode mixture is preferably 1 to 10% by mass and particularly preferably 2 to 5% by mass.

The negative electrode can be manufactured by performing kneading using the above-mentioned conductive material and the same binder and high boiling-point solvent as in the manufacturing of the positive electrode to prepared a negative electrode mixture, then applying this negative electrode mixture to a current collector such as aluminum foil, drying, pressure molding, and then subjecting the resultant to heat treatment at a temperature of about 50°C to 250°C for 2 hours under vacuum.

The density of parts excluding the current collector of the negative electrode is usually 1.5 $g/cm^3$ or more, and in order to further enhance the capacity of the battery, the density thereof is preferably 1.8 $g/cm^3$ or more and more preferably 2$g/cm^3$ or more. Incidentally, the upper limit thereof is preferably 3 $g/cm^3$ or less.

The structure of the lithium battery is not particularly limited, and a coin-type battery, a cylinder-type battery, an square-shaped battery, a laminate-type battery etc. having a unilamellar or laminated separator may be applied.

The separator for the battery is not particularly limited, but a unilamellar or laminated microporous film of a polyolefin such as polypropylene and polyethylene, woven fabric cloth, nonwoven fabric cloth, paper (cellulose), etc. may be used.

The lithium secondary battery according to the present invention is excellent in the electrochemical properties in a broad temperature range even when the charge termination voltage is 2.7 V or more, particularly 2.8 V or more, and further the properties are favorable even when the charge termination voltage is 2.9 V or more. The discharge cutoff voltage is usually 1.6 V or more, and further can be set to 1. 5 V or more. The current value is not particularly limited, but is usually used in a range of 0.1 to 30 C. Further, the lithium battery according to the present invention can be charged and discharged at -40 to 100°C, preferably -20 to 80°C.

In the present invention, as a countermeasure for increase of the inner pressure of the lithium battery, a method of establishing a safety valve at the cover of the battery, or a method of making incision on a member such as the battery can or the gasket may be also adopted. Further, as a countermeasure for the safety to prevent the overcharge, current shutoff mechanism that shutoffs the current upon perception of the inner pressure of the battery may be established on the cover of the battery.

EXAMPLES

Hereinafter, examples of the lithium secondary battery as one example of the energy storage device according to the present invention will be described, but the present invention is not limited to these examples.

[Various Measurement Methods]

(1) Volume-Based Median Diameter (D50)

A laser scattering/diffraction particle size distribution analyzer (NIKKISO CO., LTD., MICROTRAC MT3300EXII) was used as a measurement apparatus. About 50 mg of a sample was put into 50 ml of ion exchange water, 3 drops of an aqueous solution of 0.2% sodium hexametaphosphate as a surfactant was further added thereto with a dropper, and the resultant was treated by an ultrasonic disperser. The obtained solution was put into a measurement cell, distilled water was added thereto, and then a volume-based median diameter (D50) was measured when the transmittance of the apparatus became the appropriate range.

(2) BET Specific Surface Area and Specific Surface Area Equivalent Diameter $D_{BET}$

The BET specific surface area was measured using liquid nitrogen according to single-point method by using a fully-automatic specific surface area measurement apparatus (product name "Macsorb HM model-1208" manufactured by Mountech CO., Ltd.). The specific surface area equivalent diameter $D_{BET}$ was calculated by $D_{BET} = 6/(\rho S)$ assuming that all of powder particles were spherical particles having a constant diameter $D_{BET}$, wherein the specific surface area S measured by a BET method and the theoretical density p calculated from the lattice constant of cubical crystal.

(3) XRD and Crystallite Diameter $D_x$

The main peak of lithium titanate (peak representing the maximum intensity in a range of 2θ: 18.1 to 18.5°) was measured by an X-ray diffractometry using CuKα ray. The crystallite diameter $D_x$ was obtained for the main peak of the X-ray diffraction pattern by the following Scherrer equation.

$$Dx = (K\lambda) / (\beta \cos\theta) \qquad (II)$$

(provided that, K = 0.94, β: half width of the peak at which the inherent spread in the diffraction system is corrected, 2θ: diffraction angle)

(4) pH

The pH of the supernatant solution when 10 g of lithium titanate particles were dispersed in 90 g of water was measured by using a pH meter under room temperature.

Examples 1 to 16 and Comparative Examples 1 to 4

[Manufacturing of Lithium Ion Secondary Battery]

For lithium titanate ($Li_4Ti_5O_{12}$) using in Examples (LTO-A, LTO-B, and LTO-C) and Comparative Example (LTO-D), the D50 (μm), the BET specific surface area ($m^2/g$), the XRD, and the pH were measured. In addition, the specific surface area equivalent diameter $D_{BET}$ and the crystallite diameter $D_x$ were obtained by calculation described above to calculate $D_{BET}/D_x$. The results thereof are represented in Table 1.

Incidentally, lithium titanate ($Li_4Ti_5O_{12}$) using in Examples (LTO-A, LTO-B, and LTO-C) and Comparative Example (LTO-D) was produced by the following method. That is, $Li_2CO_3$ and anatase-type $TiO_2$ were used as raw materials, ion exchange water was added thereto, and the resultant was stirred, thereby preparing a mixed slurry. Then, the mixed slurry was pulverized and mixed, and the mixed slurry subjected to pulverizing and mixing was calcined by using a rotary kiln-type calcining furnace, thereby producing lithium titanate. Incidentally, in this Example, lithium titanate ($Li_4Ti_5O_{12}$) in Examples (LTO-A, LTO-B, and LTO-C) and Comparative Example (LTO-D) having each characteristic presented in Table 1 was obtained in such a manner that the average particle diameter and the particle size distribution of powder contained in the mixed slurry subjected to pulverizing and mixing were adjusted by changing the condition used in pulverizing and mixing of the mixed slurry.

[Table 1]

Table 1

| | Lithium titanate | D50 (mm) | Specific surface area ($m^2/g$) | $D_{BET}/D_x$ | pH |
|---|---|---|---|---|---|
| Example | LTO-A | 0.78 | 6.39 | 1.06 | 10.9 |
| Example | LTO-B | 0.73 | 5.81 | 1.05 | 12.7 |
| Example | LTO-C | 0.79 | 5.99 | 2.73 | 11.0 |
| Comparative Example | LTO-D | 0.81 | 6.63 | 3.20 | 11.5 |

94% by mass of lithium titanate (LTO-A, negative electrode active material), 2% by mass of acethylene black (conductive material), and 1% by mass of carbon fiber (conductive material) were mixed, and added to a solution in which 3% by mass of polyvinylidene fluoride (binder) was dissolved in 1-methyl-2-pyrrolidone in advance, and mixed, to prepare a paste of the negative electrode mixture. This paste of the negative electrode mixture was applied onto one surface of an aluminum foil (current collector), dried, pressure treated and punched to a desired size, to manufacture a negative electrode sheet. The density of parts excluding the current collector of the negative electrode was 2.2 $g/cm^3$.

In addition, 94% by mass of $LiNi_{1/3}Co_{1/3}Mn_{1/3}O_2$ and 3% by mass of acethylene black (conductive material) were mixed, and added to a solution in which 3% by mass of polyvinylidene fluoride (binder) was dissolved in 1-methyl-2-pyrrolidone in advance, and mixed, to prepare a paste of the positive electrode mixture. This paste of the positive electrode mixture was applied onto one surface of an aluminum foil (current collector), dried, pressure treated and punched to a desired size, to manufacture a positive electrode sheet. The density of parts excluding the current collector of the positive electrode was 3.6 $g/cm^3$. Then, the positive electrode sheet, a separator made of polyethylene non-woven fabric, and the negative electrode sheet were laminated in this order, and the nonaqueous electrolytic solution having the composition represented in Table 2 was added, to manufacture a 2032-type coin battery. Next, negative electrode sheets were manufactured in the same manner as in Example 1 by using LTO-B, LTO-C, and LTO-D instead of lithium titanate (LTO-A) which was used in Example 1, coin batteries were manufactured by using the manufactured negative electrode sheets, and then evaluations for the battery were performed (Examples 2 and 3 and Comparative Example 1). The results thereof are similarly represented in Table 2. Further, coin batteries were manufactured in the same

manner as in Example 1, except that the nonaqueous electrolytic solution was changed, and then evaluations for the battery were performed (Examples 4 to 18 and Comparative Examples 2 to 4). The results thereof are represented in Table 3.

[Evaluation of Low Temperature Properties after Charge and Storage at High Temperature]

<Initial Discharge Capacity>

Using the coin-type battery manufactured by the above-mentioned method, the coin-type battery was charged to 2.8 V of the termination voltage for 3 hours at 1 C constant current and constant voltage in a 25°C constant-temperature bath, and then discharged to 1.5 V of the cut-off voltage under 1 C constant current with the constant-temperature bath cooled to -10°C of the temperature, to obtain the initial -10°C discharge capacity.

<Test for High Temperature Charge and Storage>

Next, the coin-type battery was charged to 2.8 V of the termination voltage for 3 hours at 1 C constant current and constant voltage in a 85°C constant-temperature bath, and stored for 3 days as kept to 2.8 V. Then, the coin-type battery was put in a 25°C constant-temperature bath, and once discharged to 1. 5 V of the cut-off voltage under 1 C constant current.

<Discharge Capacity after Charge and Storage at High Temperature>

Further, thereafter, the -10°C discharge capacity after charge and storage at high temperature was obtained in the same manner as in the measurement of the initial discharge capacity.

<Low Temperature Properties after Charge and Storage at High Temperature>

The low temperature properties after charge and storage at high temperature were obtained from the retention ratio of the -10°C discharge capacity described below.

Retention ratio of -10°C discharge capacity after charge and storage at high temperature (%) = (-10°C discharge capacity after charge and storage at high temperature/initial -10°C discharge capacity) x 100

[Table 2]

**Table 2**

| | Lithium titananic | Composition of electrolytic selt Composition of nonaqueous electrolyte solution (volume ratio of solvent) | Compound having oxalate structure | Addition amount of compound having oxalate structure (content in nonaqueous electrolyte solution (% by mass)) | Isocyanate compound | Addition amount of isocyanate compound (content in nonaqueous electrolyte solution (% by mass)) | Retention ratio (%) of -10° C discharge capacity after storage at high temperature of 85° C |
|---|---|---|---|---|---|---|---|
| Example 1 | LTO-A | 1.1 M $LiPF_6$ EC/PC/MEC/DEC (10/20/20/50) | 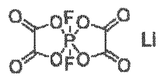 | 0.5 | 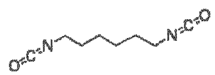 | 1 | 82 |
| Example 2 | LTO-B | | | | | | 79 |
| Example 3 | LTO-C | | | | | | 81 |
| Comparative Example 1 | LTO-D | | | | | | 69 |

[Table 3]

Table 3

| | Lithium titanate | Composition of electrolytic salt Composition of monequeous electrolyte solution (volume ratio of solvent) | Compound having oxalate structure | Addition amount of compound having oxalate structure (content in nonaqueous electrolyte solution (% by mass)) | Isocyanate compound | Addition amount of isocyanate compound (content in nonaqueous electrolyte solution (% by mass)) | Retention ratio (%) of -10° C discharge capacity after storage at high temperature of 85° C |
|---|---|---|---|---|---|---|---|
| Example 1 | | 1.1 M $LiPF_6$ EC/PC/MEC/DEC (10/20/20/50) | 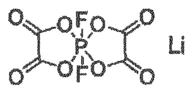 | 0.5 | 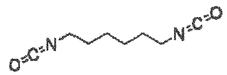 | 1 | 82 |
| Example 4 | | | | 0.05 | | 1 | 74 |
| Example 5 | | | | 2 | | 1 | 73 |
| Example 6 | | | | 0.5 | | 0.7 | 78 |
| Example 7 | | | | 0.5 | | 4 | 76 |
| Example 8 | | | | 0.5 | 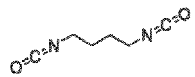 | 1 | 81 |
| Example 9 | | | | 0.5 | 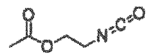 | 1 | 76 |
| Example 10 | | | | 0.5 | 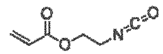 | 1 | 77 |
| Example 11 | | | | 0.5 | 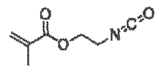 | 1 | 79 |
| Example 12 | | 1 M $LPF_6$+ 0.1 M LiTFMSB EC/PC/MEC/DEC (10/20/20/50) | | 0.5 | | 1 | 84 |

(continued)

| | Lithium titanate | Composition of electrolytic salt Composition of monequeous electrolyte solution (volume ratio of solvent) | Compound having oxalate structure | Addition amount of compound having oxalate structure (content in nonaqueous electrolyte solution (% by mass)) | Isocyanate compound | Addition amount of isocyanate compound (content in nonaqueous electrolyte solution (% by mass)) | Retention ratio (%) of -10° C discharge capacity after storage at high temperature of 85° C |
|---|---|---|---|---|---|---|---|
| Example 13 | | | 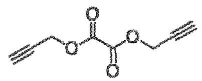 | 0.5 | 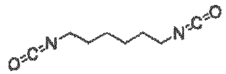 | 1 | 78 |
| Example 14 | LTO-A | 1.1 M $LPF_6$ | 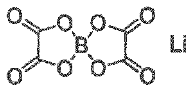 | 0.5 | | 1 | 78 |
| Example 15 | | EC/PC/MEC/DEC | 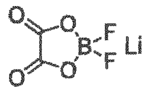 | 0.5 | | 1 | 79 |
| Example 16 | | (10/20/20/50) | 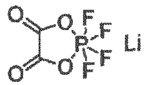 | 0.5 | | 1 | 81 |
| Examples 17 | | 1 M $LiPF_6$+ 0.1 M $LiPO_2F_2$ EC/PC/MEC/DEC (10/20/20/50) | 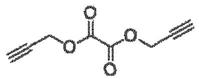 | 0.5 | 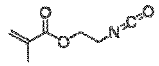 | 1 | 82 |
| Example 18 | | 1 M $LiPF_6$+ 0.1 M $FSO_3Li$ EC/PC/MEC/DEC (10/20/20/50) | | 0.5 | 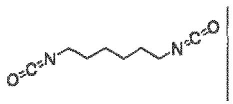 | 1 | 83 |

(continued)

| | Lithium titanate | Composition of electrolytic salt Composition of monequeous electrolyte solution (volume ratio of solvent) | Compound having oxalate structure | Addition amount of compound having oxalate structure (content in nonaqueous electrolyte solution (% by mass)) | Isocyanate compound | Addition amount of isocyanate compound (content in nonaqueous electrolyte solution (% by mass)) | Retention ratio (%) of -10° C discharge capacity after storage at high temperature of 85° C |
|---|---|---|---|---|---|---|---|
| Comparative Example 2 | | 1.1 M $LiPF_6$ | None | 0 | None | 0 | 64 |
| Comparative Examples 3 | | EC/PC/MEC/DEC | 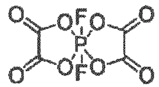 Li | 0.5 | | 0 | 69 |
| Comparative Example 4 | | (10/20/20/50) | None | 0 | 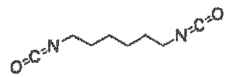 | 1 | 67 |

From the comparison of Examples 1 to 3 and Comparative Example 1 described above, it is found that the effect of the present invention becomes a particular effect obtained by using the nonaqueous electrolytic solution containing the specific compound described above in the lithium secondary battery as one example of the energy storage device containing, as a negative electrode active material, the specific lithium titanate according to the present invention. In addition, in all of lithium secondary batteries of Examples 4 to 18 described above, the electrochemical properties in a broad temperature range are significantly improved compared to Comparative Example 2 in which the organic or inorganic compound having an oxalate structure and the isocyanate compound represented by General Formula (I) were not added in the nonaqueous electrolytic solution of the present invention, Comparative Example 3 in which only the organic or inorganic compound having an oxalate structure was added, and Comparative Example 4 in which only the isocyanate compound represented by General Formula (I) was added.

INDUSTRIAL APPLICABILITY

By using the nonaqueous electrolytic solution of the present invention, it is possible to obtain an energy storage device, such as a lithium secondary battery, that is excellent in the electrochemical properties in a broad temperature range. Particularly, when the energy storage device is used as a lithium secondary battery loaded in a hybrid electric vehicle, a plug-in hybrid electric vehicle, battery electric vehicle, etc. , the electrochemical properties are less likely to decrease in a broad temperature range.

## Claims

1. A nonaqueous electrolytic solution for an energy storage device provided with a positive electrode, a negative electrode and a nonaqueous electrolytic solution which is obtained by dissolving an electrolytic salt into a nonaqueous solvent, wherein
   the negative electrode contains, as a negative electrode active material, lithium titanate that has a ratio $D_{BET}/D_x$ ($\mu m/\mu m$) of 3 or less, the ratio $D_{BET}/D_x$ ($\mu m/\mu m$) being a ratio of a specific surface area equivalent diameter $D_{BET}$ calculated from a specific surface area measured by a BET method to a crystallite diameter $D_X$ calculated using a Scherrer equation from an X-ray diffractometry result, and
   the nonaqueous electrolytic solution contains 0.01 to 3% by mass of an organic or inorganic compound having an oxalate structure, and 0.01 to 5% by mass of at least one isocyanate compound represented by the following General Formula (I),

   **O=C=N-X** (**I**)

   wherein, -X represents $-R^1-N=C=O$ or $-R^1-O-C(=O)-R^2$, $R^1$ represents a linear or branched alkylene group having 1 to 6 carbon atoms in which at least one hydrogen atom is optionally substituted with a halogen atom, and $R^2$ represents an alkyl group having 1 to 6 carbon atoms, alkenyl group having 2 to 6 carbon atoms, or aryl group having 6 to 12 carbon atoms in which at least one hydrogen atom is optionally substituted with a halogen atom.

2. The nonaqueous electrolytic solution for an energy storage device according to claim 1, wherein the organic or inorganic compound having an oxalate structure is bis(2-propynyl) oxalate or lithium difluorobis[oxalate-O,O'] phosphate.

3. The nonaqueous electrolytic solution for an energy storage device according to claim 1 or 2, wherein the isocyanate compound represented by the above General Formula (I) is 1, 6-diisocyanate hexane, 2-isocyanatoethyl acrylate, or 2-isocyanatoethyl methacrylate.

4. The nonaqueous electrolytic solution for an energy storage device according to any one of claims 1 to 3, wherein the nonaqueous solvent contains cyclic carbonate and chain ester.

5. The nonaqueous electrolytic solution for an energy storage device according to claim 4, wherein the cyclic carbonate is at least any one of ethylene carbonate, propylene carbonate, 1,2-butylene carbonate, 2,3-butylene carbonate, 4-fluoro-1,3-dioxolane-2-one, trans- or cis-4,5-difluoro-1,3-dioxolane-2-one, vinylene carbonate, vinyl ethylene carbonate, and 4-ethynyl-1,3-dioxolane-2-one.

6. The nonaqueous electrolytic solution for an energy storage device according to claim 4 or 5, wherein the chain ester is at least any one of asymmetrically chain carbonates selected from methyl ethyl carbonate, methyl propyl carbonate,

methyl isopropyl carbonate, methyl butyl carbonate, and ethyl propyl carbonate, symmetrically chain carbonates selected from dimethyl carbonate, diethyl carbonate, dipropyl carbonate, and dibutyl carbonate, and chain carboxylic acid esters selected from methyl propionate, ethyl propionate, methyl acetate, and ethyl acetate.

**7.** The nonaqueous electrolytic solution for an energy storage device according to any one of claims 1 to 6, wherein the electrolytic salt is a lithium salt.

**8.** The nonaqueous electrolytic solution for an energy storage device according to any one of claims 1 to 7, wherein the electrolytic salt is at least any one of $LiPF_6$, $LiPO_2F_2$, $Li_2PO_3F$, $LiBF_4$, $LiN(SO_2CF_3)_2$ $LiN(SO_2C_2F_5)_2$, $FSO_3Li$, and lithium trifluoro ((methanesulfonyl)oxy)borate.

**9.** An energy storage device comprising:

a positive electrode;
a negative electrode; and
a nonaqueous electrolytic solution which is obtained by dissolving an electrolytic salt into a nonaqueous solvent, wherein
the negative electrode which contains, as a negative electrode active material, lithium titanate that has a ratio $D_{BET}/D_X$ (μm/μm) of 3 or less, the ratio $D_{BET}/D_X$ (μm/μm) being a ratio of a specific surface area equivalent diameter $D_{BET}$ calculated from a specific surface area measured by a BET method to a crystallite diameter $D_X$ calculated using a Scherrer equation from an X-ray diffractometry result, and
the nonaqueous electrolytic solution contains 0.01 to 3% by mass of an organic or inorganic compound having an oxalate structure, and 0.01 to 5% by mass of at least one isocyanate compound represented by the following General Formula (I),

$$O=C=N-X \qquad (\mathbf{I})$$

wherein, -X represents $-R^1-N=C=O$ or $-R^1-O-C(=O)-R^2$, $R^1$ represents a linear or branched alkylene group having 1 to 6 carbon atoms in which at least one hydrogen atom is optionally substituted with a halogen atom, and $R^2$ represents an alkyl group having 1 to 6 carbon atoms, alkenyl group having 2 to 6 carbon atoms, or aryl group having 6 to 12 carbon atoms in which at least one hydrogen atom is optionally substituted with a halogen atom.

**10.** The energy storage device according to claim 9, wherein the positive electrode contains at least one selected from lithium complex metal oxides and lithium-containing olivine-type phosphoric acid salts as a positive electrode active material.

## INTERNATIONAL SEARCH REPORT

International application No.
PCT/JP2014/072776

A. CLASSIFICATION OF SUBJECT MATTER
*H01M10/0525*(2010.01)i, *H01M4/485*(2010.01)i, *H01M10/0567*(2010.01)i, *H01M10/0568*(2010.01)i, *H01M10/0569*(2010.01)i

According to International Patent Classification (IPC) or to both national classification and IPC

B. FIELDS SEARCHED

Minimum documentation searched (classification system followed by classification symbols)
H01M10/0525, H01M4/485, H01M10/0567, H01M10/0568, H01M10/0569

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2012-182131 A (Mitsubishi Chemical Corp.), 20 September 2012 (20.09.2012), paragraphs [0099] to [0102], [0147]; examples 1 to 3 & US 2013/0330609 A1 & EP 2675010 A1 & WO 2012/108270 A1 & CN 103354962 A & KR 10-2014-0036156 A | 1-10 |
| A | WO 2013/058224 A1 (Ube Industries, Ltd.), 25 April 2013 (25.04.2013), paragraphs [0065], [0069]; example 14 & CA 2852625 A1 & US 2014/287325 A1 & EP 2770571 A1 & CN 103891033 A & KR 10-2014-0083031 A | 1-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 28 October, 2014 (28.10.14) | 04 November, 2014 (04.11.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2014/072776

C (Continuation). DOCUMENTS CONSIDERED TO BE RELEVANT

| Category* | Citation of document, with indication, where appropriate, of the relevant passages | Relevant to claim No. |
|---|---|---|
| A | JP 2011-187440 A (Mitsubishi Chemical Corp.), 22 September 2011 (22.09.2011), paragraphs [0050] to [0055], [0129] to [0136], [0214] to [0245], [0283]; examples 22, 24 & US 2012/0308881 A1 & EP 2535976 A1 & WO 2011/099585 A1 & CN 102754268 A & KR 10-2012-0133378 A | 1-10 |
| A | JP 2008-243729 A (Toshiba Corp.), 09 October 2008 (09.10.2008), paragraphs [0012], [0031], [0096] to [0097] & US 2008/0241692 A1 | 1-10 |
| A | JP 2007-018883 A (Toshiba Corp.), 25 January 2007 (25.01.2007), paragraphs [0125] to [0128], [0165] to [0168]; example 1; fig. 8 & US 2007/0009798 A1 & KR 10-2007-0006581 A & CN 1893166 A | 1-10 |
| A | JP 2005-317512 A (Toshiba Corp.), 10 November 2005 (10.11.2005), paragraphs [0013], [0099] to [0100] & US 2005/0221188 A1 & KR 10-2006-0044970 A & CN 1677740 A | 1-10 |
| A | JP 2012-151121 A (Toshiba Corp.), 09 August 2012 (09.08.2012), paragraphs [0010], [0044] to [0047] (Family: none) | 1-10 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2009054319 A